# EUROPÄISCHE PATENTSCHRIFT

(11) **EP 1 767 757 B1**
(45) Veröffentlichungstag und Bekanntmachung des Hinweises auf die Patenterteilung: **11.11.2015**
(21) Anmeldenummer: 06120632.2
(22) Anmeldetag: 14.09.2006
(51) Int. Cl.: F02D 41/14, F01N 3/20, B01F 3/02, F01N 3/28, F01N 13/08, B01F 5/06, F01N 13/18

(54) **Mischglied für eine Abgasanlage**
Mixing element for an exhaust system
Elément mélangeur pour un système d'échappement

(30) Priorität: 27.09.2005 DE 102005046316
(43) Veröffentlichungstag der Anmeldung: 28.03.2007
(73) Patentinhaber: Eberspächer Exhaust Technology GmbH & Co. KG, 66539 Neunkirchen (DE)
(72) Erfinder: MÜLLER, Manfred, 73666, Baltmannsweiler (DE); KOBE, Jürgen, 72622, Nürtingen (DE); BRAUN, Dr. Joachim, 73732, Esslingen (DE)
(74) Vertreter: BRP Renaud & Partner mbB Rechtsanwälte Patentanwälte Steuerberater

(56) Entgegenhaltungen:
- WO-A-88/04358
- DE-A1- 3 721 810
- DE-A1- 10 008 458
- DE-U- 6 912 770
- JP-A- 2002 089 245
- US-A- 4 947 645
- US-A- 5 018 349
- US-A- 5 144 799
- US-A1- 2003 005 688
- US-B1- 6 247 305

## Beschreibung

Die vorliegende Erfindung betrifft ein Mischglied für eine Abgasanlage einer Brennkraftmaschine, insbesondere eines Kraftfahrzeugs. Die Erfindung betrifft außerdem eine mit einem solchen Mischglied ausgestattete Abgasanlage.

Abgasanlagen von Brennkraftmaschinen können zweiflutig ausgestaltet sein, also zwei separate Abgasstränge aufweisen, welche die Abgase von der Brennkraftmaschine parallel abführen. Beispielsweise sind zweiflutige Abgasanlagen bei V-Motoren zweckmäßig, um die Abgase der beiden Zylinderbänke separat abzuführen. Des weiteren ist es zur Reduzierung von Schadstoffemissionen üblich, die Abgasanlage mit Abgasreinigungseinrichtungen, wie z.B. Katalysatoren und Partikelfiltern, zu versehen. Um die ordnungsgemäße Funktionsweise derartiger Abgasbehandlungseinrichtungen überprüfen zu können, ist es möglich, stromab der jeweiligen Einrichtung einen entsprechenden Sensor bzw. eine entsprechende Sonde im Abgasstrang anzuordnen. Mit Hilfe dieser Sonde bzw. mit Hilfe dieses Sensors kann beispielsweise der Restgehalt bestimmter Schadstoffe im Abgas detektiert werden. Diese Funktionsprüfung ist von erhöhter Bedeutung bei Katalysatoranordnungen, bei denen auf einen Oxidationskatalysator ein Katalysator mit selektiver katalytischer Reduktion, kurz SCR-Katalysator folgt, wobei stromauf des SCR-Katalysators Ammoniak oder Harnstoff, der sich aufgrund der hohen Abgastemperaturen in Ammoniak umwandelt, eingeleitet wird. Mit Hilfe eines entsprechenden Sensors lässt sich nun stromab der Katalysatoranordnung feststellen, ob eine Restmenge von Ammoniak oder Harnstoff im Abgas enthalten ist. In Abhängigkeit dieser Messung kann die ordnungsgemäße Funktion der Katalysatoranordnung beurteilt werden. Ggf. kann auch in die Steuerung oder Regelung der Katalysatoranordnung entsprechend eingegriffen werden.

Bei zweiflutigen Abgasanlagen, die in jedem Abgasstrang eine eigene Katalysatoranordnung enthalten, ist es grundsätzlich möglich, stromab der jeweiligen Katalysatoranordnung jeweils eine entsprechende Sonde im Abgasstrang anzuordnen. Derartige Sonden oder Sensoren sind jedoch vergleichsweise teuer, insbesondere der damit verbundene Aufwand für die Montage sowie für Auswerteschaltungen.

Dokument DE 6 912 770 U beschreibt ein Mischglied gemäß dem Oberbegriff des Anspruchs 1.

Hier setzt die vorliegende Erfindung an. Die Erfindung beschäftigt sich mit dem Problem, eine Möglichkeit aufzuzeigen, mit deren Hilfe bei einer zweiflutigen Abgasanlage die Funktionsüberwachung von in den Abgassträngen vorgesehenen Katalysatoranordnungen preiswerter gestaltet werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, für die zweiflutige Abgasanlage ein Mischglied vorzusehen, das über zwei Einlassöffnungen und zwei Auslassöffnungen in die beiden Abgasstränge einer zweiflutigen Abgasanlage einsetzbar ist, wobei im Mischglied die genannten vier Öffnungen so miteinander verschaltet sind, dass jede Einlassöffnung mit beiden Auslassöffnungen verbunden ist. Auf diese Weise wird erreicht, dass Abgase, die durch die eine Einlassöffnung in das Mischglied eintreten, durch beide Auslassöffnungen aus dem Mischglied wieder austreten. Ebenso treten auch diejenigen Abgase, die über die andere Einlassöffnung in das Mischglied eintreten, über beide Auslassöffnungen aus dem Mischglied wieder aus. Für die mit dem Mischglied ausgestattete zweiflutige Abgasanlage bedeutet dies, dass die über den einen Abgasstrang zum Mischglied geführten Abgase stromab des Mischglieds in beiden Abgassträngen strömen. Dies gilt in entsprechender Weise auch für den anderen Abgasstrang, dessen dem Mischglied zugeführten Abgase nach dem Mischglied in beiden Abgassträngen strömen. Die Verwendung eines derartigen Mischglieds hat somit zur Folge, dass stromab des Mischglieds aus beiden Auslassöffnungen ein Gasgemisch austritt, das sich aus den beiden einzelnen Gasströmen, die den beiden Einlassöffnungen separat zugeleitet werden, zusammensetzt. Dies hat jedoch zur Folge, dass stromab des Mischglieds in beiden Abgassträngen sowohl ein Teil der Abgase des einen Abgasstrangs als auch ein Teil der Abgase des anderen Abgasstrangs strömen. Ein stromab des Mischglieds angeordneter Sensor kann somit die Abgase beider stromauf des Mischglieds verlaufender Abgasstränge analysieren. Eine Fehlfunktion in der einen oder in der anderen oder in beiden Katalysatoranordnungen der beiden Abgasstränge lassen sich somit mit Hilfe nur eines einzigen Sensors feststellen. Somit lassen sich die Herstellungskosten für eine zweiflutige Abgasanlage entsprechend reduzieren.

Entsprechend der Erfindung enthält das Mischglied ein Kanalsystem, das jede Einlassöffnung über zwei separate Kanäle mit den beiden Auslassöffnungen verbindet. Auf diese Weise lässt sich in beiden abgeführten Abgasströmungen ein vorbestimmtes Mischungsverhältnis zwischen den beiden zugeführten Abgasströmen erzielen. Des weiteren lässt sich mit einem solchen Kanalsystem der Strömungswiderstand des Mischglieds reduzieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine perspektivische vereinfachte Ansicht einer Abgasanlage im Bereich eines Mischglieds,
- Fig. 2: eine Draufsicht auf das Mischglied,
- Fig. 3: einen Längsschnitt des Mischglieds,
- Fig. 4: eine nochmals vereinfachte perspektivische Ansicht des Mischglieds.

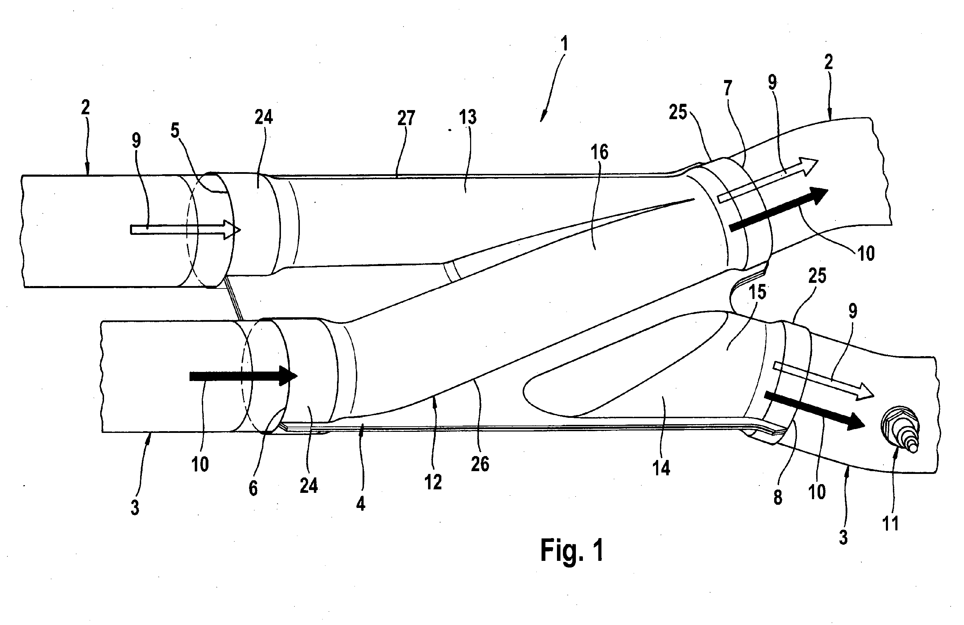

Entsprechend Fig. 1 umfasst eine zweiflutige Abgasanlage 1 zwei Abgasstränge 2, 3, die Abgase von einer nicht gezeigten Brennkraftmaschine, die insbesondere in einem Kraftfahrzeug angeordnet ist, wegführen. Die beiden Abgasstränge 2, 3 sind über ein Mischglied 4 miteinander gekoppelt. Dabei sind die beiden Abgasstränge 2, 3 separat an das Mischglied 4 herangeführt und auch separat vom Mischglied 4 weggeführt. Dementsprechend besitzt das Mischglied 4 zwei Einlassöffnungen, nämlich eine dem ersten Abgasstrang 2 zugeordnete erste Einlassöffnung 5 und eine dem zweiten Abgasstrang 3 zugeordnete zweite Einlassöffnung 6. Des weiteren sind auch zwei Auslassöffnungen vorgesehen, nämlich eine dem ersten Abgasstrang 2 zugeordnete erste Auslassöffnung 7 und eine dem zweiten Abgasstrang 3 zugeordnete zweite Auslassöffnung 8. Dieses Mischglied 4 ist nun so ausgestaltet, dass jede seine Einlassöffnungen 5, 6 mit beiden Auslassöffnungen 7, 8 kommunizierend verbunden ist. Diese besondere Bauweise hat zur Folge, dass eine erste Abgasströmung 9, die stromauf des Mischglieds 4 über den ersten Abgasstrang 2 zugeführt wird und die in Fig. 1 durch Konturpfeile symbolisiert ist, stromab des Mischglieds 4 in beiden Abgassträngen 2, 3 zu finden ist. Entsprechendes gilt auch für eine zweite Abgasströmung 10, die dem Mischglied 4 über den zweiten Abgasstrang 3 zugeführt wird und die in Fig. 1 durch Vollpfeile symbolisiert ist. Auch diese findet sich stromab des Mischglieds 4 in beiden Abgassträngen 2, 3 wieder. Dabei ist grundsätzlich klar, dass die hier exemplarisch gezeigten Strömungsrichtungen auch umgekehrt sein können.

Bei einer bevorzugten Anwendung der zweiflutigen Abgasanlage 1 ist in jedem Abgasstrang 2, 3 stromauf des Mischglieds 4 jeweils eine hier nicht gezeigte Katalysatoranordnung eingebaut. Beispielsweise umfasst eine derartige Katalysatoranordnung einen Oxidationskatalysator sowie einen stromab davon angeordneten SCR-Katalysator. Des weiteren kann die Katalysatoranordnung mit einer Harnstoffzuführeinrichtung ausgestattet sein, die stromauf des SCR-Katalysators Harnstoff in den jeweiligen Abgasstrang 2, 3 einleitet. Im Betrieb der Abgasanlage 1 wird der eingedüste Harnstoff aufgrund der herrschenden hohen Betriebstemperaturen in Ammoniak umgewandelt. Im SCR-Katalysator lassen sich mit Hilfe des Ammoniaks Stickoxide zu Stickstoff und Wasser reduzieren.

Bei einer Fehlfunktion der Katalysatoranordnung lassen sich stromab der Katalysatoranordnung in der Abgasströmung 9, 10 unerwünschte Schadstoffe bzw. Schadstoffe in unerwünscht hohen Konzentrationen feststellen. Beispielsweise kann eine Fehlfunktion der zuvor exemplarisch erläuterten Katalysatoranordnung im Abgas zu einem unerwünscht hohen Harnstoffgehalt oder Ammoniakgehalt führen.

Das vorgesehene Mischglied 4 bietet nun die Möglichkeit, stromab des Mischglieds 4 mit Hilfe nur eines einzigen Sensors 11 die Abgase 9, 10 beider Abgasstränge 2, 3 zu analysieren. Denn stromab des Mischglieds 4 herrscht in jedem Abgasstrang 2, 3 ein Abgasgemisch, das sich aus den Abgasen 9, 10 der beiden Abgasstränge 2, 3 stromauf des Mischglieds 4 zusammensetzt. Sollte beispielsweise der SCR-Katalysator bzw. die Harnstoffzuführeinrichtung in einem der beiden Abgasstränge 2, 3 eine Fehlfunktion aufweisen, die zu einem überhöhten Harnstoffgehalt oder Ammoniakgehalt im Abgas 9, 10 stromab der jeweiligen Katalysatoranordnung führt, so lässt sich dies bei einer hinreichenden Konzentration von Ammoniak bzw. Harnstoff mit Hilfe der Sonde 11 feststellten, und zwar unabhängig davon, ob sich der Sensor 11 im ersten Abgasstrang 2 oder im zweiten Abgasstrang 3 befindet. Dabei ist klar, dass grundsätzlich auch mehrere Sensoren 11 oder Sonden 11 vorgesehen sein können, die redundant und/oder hinsichtlich unterschiedlicher Analysen spezialisiert sind.

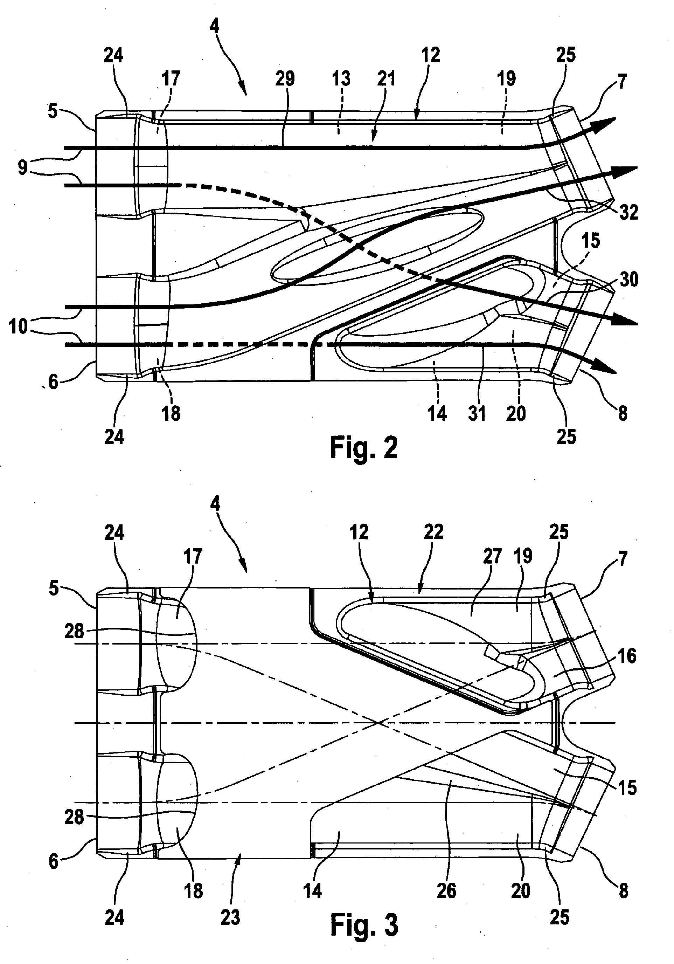

Entsprechend den Fig. 1 bis 4 enthält das Mischglied 4 ein Kanalsystem 12. Dieses Kanalsystem 12 umfasst insgesamt vier Kanäle. Ein erster Kanal 13 verbindet die erste Einlassöffnung 5 mit der ersten Auslassöffnung 7. Dabei erstreckt sich der erste Kanal 13 im wesentlichen geradlinig und senkrecht zu einer Öffnungsebene der ersten Einlassöffnung 5. Bezüglich einer im wesentlichen rechteckigen Grundform des Mischglieds 4, vgl. die Draufsichten der Fig. 2 und 3, erstreckt sich der erste Kanal 13 im wesentlichen in Längsrichtung des Mischglieds 4.

Ein zweiter Kanal 14 verbindet die zweite Einlassöffnung 6 mit der zweiten Auslassöffnung 8. Auch der zweite Kanal 14 erstreckt sich im wesentlichen geradlinig sowie senkrecht zu einer Öffnungsebene der zweiten Einlassöffnung 6. Der zweite Kanal 14 erstreckt sich somit bezüglich der Rechteckform des Mischglieds 4 ebenfalls in dessen Längsrichtung.

Ein dritter Kanal 15 verbindet die erste Einlassöffnung 5 mit der zweiten Auslassöffnung 8. Der dritte Kanal 15 erstreckt sich somit im wesentlichen diagonal zur rechteckigen Grundform des Mischglieds 4. Dabei steht eine Längsrichtung des dritten Kanals 15 im wesentlichen senkrecht auf einer Öffnungsebene der zweiten Auslassöffnung 8.

Ein vierter Kanal 16 verbindet die zweite Einlassöffnung 6 mit der ersten Auslassöffnung 7. Bezüglich der rechteckigen Grundform des Mischglieds 4 erstreckt sich auch der vierte Kanal 16 diagonal. Insbesondere steht eine Längsrichtung des vierten Kanals 16 im wesentlichen senkrecht auf einer Öffnungsebene der ersten Auslassöffnung 7.

Somit umfasst das Kanalsystem 12 für jede Öffnung 5 bis 8 zwei Kanäle 13 bis 16 zur separaten Verbindung mit den beiden gegenüberliegenden Öffnungen 5 bis 8. So ist die erste Einlassöffnung 5 über den ersten Kanal 13 mit der ersten Auslassöffnung 7 und unabhängig davon über den dritten Kanal 15 mit der zweiten Auslassöffnung 8 verbunden. Die zweite Einlassöffnung 6 ist über den vierten Kanal 16 mit der ersten Auslassöffnung 7 und unabhängig davon über den zweiten Kanal 14 mit der zweiten Auslassöffnung 8 verbunden. Auch ist die erste Auslassöffnung 7 über den ersten Kanal 13 mit der ersten Einlassöffnung 5 und unabhängig davon über den vierten Kanal 16 mit der zweiten Einlassöffnung 6 verbunden. Die zweite Auslassöffnung 8 ist über den zweiten Kanal 14 mit der zweiten Einlassöffnung 6 und unabhängig davon über den dritten Kanal 15 mit der ersten Einlassöffnung 5 verbunden.

Entsprechend den Fig. 2 bis 4 weist das Mischglied 2 für jede Einlassöffnung 5, 6 einen Einlassraum, nämlich einen ersten Einlassraum 17 und einen zweiten Einlassraum 18 auf. Auf entsprechende Weise ist auch für jede Auslassöffnung 7, 8 ein Auslassraum vorgesehen, nämlich ein erster Auslassraum 19 und ein zweiter Auslassraum 20. Vom ersten Einlassraum 17 zweigen der erste Kanal 13 und der dritte Kanal 15 zu den Auslassöffnungen 7, 8 ab. Vom zweiten Einlassraum 18 zweigen der zweite Kanal 14 und der vierte Kanal 16 zu den Auslassöffnungen 7, 8 ab. In den ersten Auslassraum 19 münden der erste Kanal 13 und der vierte Kanal 16 ein. In den zweiten Auslassraum 20 münden der zweite Kanal 14 und der dritte Kanal 15 ein.

Den Fig. 1 bis 4 ist deutlich entnehmbar, dass bei jeder Öffnung 5 bis 8 die beiden zugeordneten Kanäle 13 bis 16 Y-förmig angeordnet sind. Des weiteren laufen zwei der vier Kanäle, nämlich der erste Kanal 13 und der zweite Kanal 14 im wesentlichen parallel zueinander. Dabei erstrecken sich diese beiden Kanäle 13, 14 voneinander getrennt, derart, dass sich die durch diese Kanäle 13, 14 strömenden Abgasströmungen nicht miteinander vermischen.

Die beiden anderen Kanäle 15, 16 sind so angeordnet, dass sie zueinander gekreuzt verlaufen, das heißt, die beiden Kanäle 15, 16 kreuzen sich in den Draufsichten der Fig. 2 und 3 X-förmig. Auch ist für diese beiden Kanäle 15, 16 das Kanalsystem 12 so ausgestaltet, dass sich Abgasströmungen, die durch diese beiden Kanäle 15, 16 strömen, im Mischglied 4 nicht miteinander vermischen.

Erfindunsgemäß ist das Kanalsystem 12 so ausgestaltet, dass alle vier Kanäle 13 bis 16 etwa gleich große Strömungsquerschnitte aufweisen. Hierdurch soll erreicht werden, dass sich die beiden, dem Mischglied 4 zugeführten Abgasströmungen 9, 10 einlassseitig des Mischglieds 4 gleichmäßig, also hälftig aufteilen und auslassseitig des Mischglieds 4 wieder zu gleich großen Abgasströmungen rekombinieren.

Entsprechend den Fig. 2 und 3 ist das Mischglied 4 vorzugsweise aus zwei Halbschalen, nämlich aus einer in Fig. 2 sichtbaren Oberschale 21 und einer in Fig. 3 sichtbaren Unterschale 22 zusammengebaut. Des weiteren ist eine Einlegeplatte 23 vorgesehen, die zwischen den beiden Halbschalen 21, 22 angeordnet ist. Der Schnitt in Fig. 3 ist so gelegt, dass die Einlegeplatte 23 sichtbar ist. Dabei ist erkennbar, dass die Einlegeplatte 23 so dimensioniert ist, dass sie sich an den Längsseiten des Mischglieds 4 bis nach außen erstreckt und in einen Abschnitt des Längsrands des Mischglieds 4 integriert ist. Entlang des Randes sind die Halbschalen 21, 22 aneinander und in besagtem Randabschnitt auch an der Einlegeplatte 23 befestigt, beispielsweise durch Verschweißen und/oder Verlöten.

Die Halbschalen 21, 22 sind zweckmäßig Tiefziehteile und sind vorzugsweise als Gleichteile ausgestaltet. Dabei umfasst jede Halbschale 21, 22 zwei Einlassöffnungsabschnitte 24, zwei Auslassöffnungsabschnitte 25 und zwei Kanalabschnitte 26, 27. Die Kanalabschnitte 26, 27 sind dabei zur jeweils anderen Halbschale 21, 22 hin offen. Die beiden Kanalabschnitte 26, 27 verbinden bei der Oberschale 21 die erste Auslassöffnung 7 mit beiden Einlassöffnungen 5, 6 und bei der Unterschale 22 die zweite Auslassöffnung 8 mit beiden Einlassöffnungen 5, 6.

Die Einlegeplatte 23 ist nun so geformt, dass sie im montierten Zustand besagte Kanalabschnitte 26, 27 jeweils zur anderen Halbschale 21, 22 hin verschließt, allerdings nur in den Abschnitten der Kanäle 13 bis 16 zwischen den Einlassräumen 17, 18 und den Auslassräumen 19, 20. Des weiteren bildet die Einlegeplatte 23 in den Einlassräumen 17, 18 jeweils eine Anströmkante 28, in welche die ankommende Abgasströmung 9, 10 in die beiden vom jeweiligen Einlassraum 17, 18 abgehenden Kanäle 13 bis 16 aufteilt.

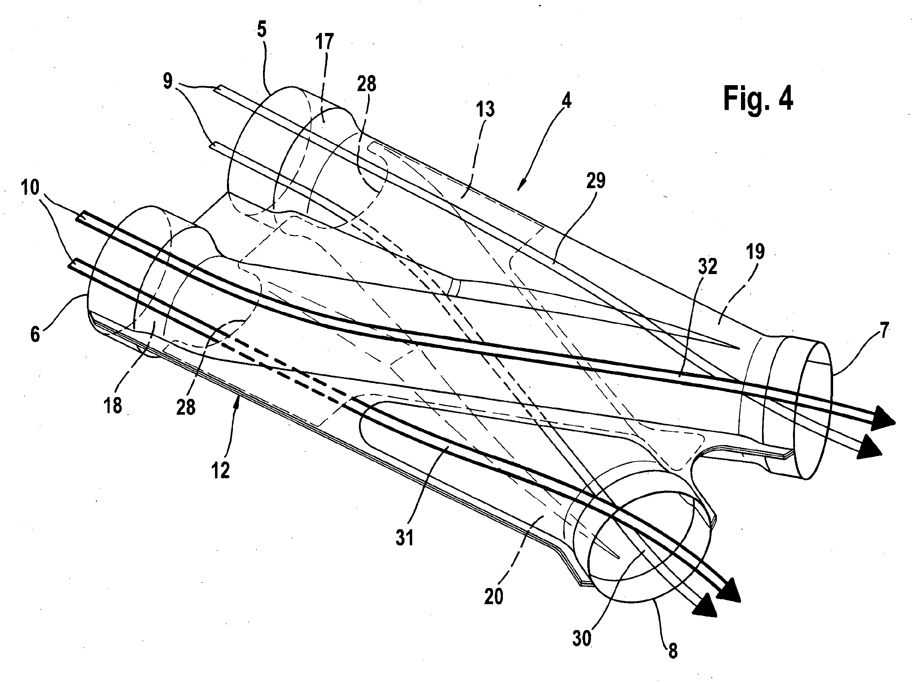

In den Fig. 2 und 4 ist jeweils die Strömungsführung innerhalb des Mischglieds 4 mittels entsprechender Strömungspfeile verdeutlicht. Die über den ersten Abgasstrang 2 zugeführte erste Abgasströmung 9 wird im ersten Einlassraum 17 in eine erste Teilströmung 29 und eine zweite Teilströmung 30 unterteilt. Die erste Teilströmung 29 folgt dem ersten Kanal 13 und tritt über den ersten Auslassraum 19 durch die erste Auslassöffnung 7 aus dem Mischglied 4 aus. Die zweite Teilströmung 30 folgt dem dritten Kanal 15 und tritt über den zweiten Auslassraum 20 durch die zweite Auslassöffnung 8 aus dem Mischglied 4 aus. Die über den zweiten Abgasstrang 3 zugeführte zweite Abgasströmung 10 wird im zweiten Einlassraum 18 in eine dritte Teilströmung 31 und eine vierte Teilströmung 32 aufgeteilt. Die dritte Teilströmung 31 gelangt durch den zweiten Kanal 14 in den zweiten Auslassraum 20 und über die zweite Auslassöffnung 8 aus dem Mischglied 4 heraus. Die vierte Teilströmung 32 strömt durch den vierten Kanal 16 über den ersten Auslassraum 19 durch die erste Auslassöffnung 7 aus dem Mischglied 4 heraus. Im ersten Auslassraum 19 vermischt sich der erste Teilstrom 29 mit dem vierten Teilstrom 32. Im Unterschied dazu vermischt sich im zweiten Auslassraum 20 der zweite Teilstrom 30 mit dem dritten Teilstrom 31.

## Patentansprüche

1. Mischglied für eine Abgasanlage (1) einer Brennkraftmaschine, insbesondere eines Kraftfahrzeuges,
- mit zwei Einlassöffnungen (5, 6) und zwei Auslassöffnungen (7, 8),
- wobei jede Einlassöffnung (5, 9) mit beiden Auslassöffnungen (7, 8) kommunizierend verbunden ist,
- wobei das Mischglied (4) aus zwei Halbschalen (21, 22) und einer dazwischen angeordneten Einlegeplatte (23) zusammengebaut ist,
- wobei jede Halbschale (21, 22) zwei Einlassöffnungsabschnitte (24), zwei Auslassöffnungsabschnitte (25) und zwei zur anderen Halbschale (21, 22) hin offene Kanalabschnitte (26, 27) aufweist, die eine Einlassöffnung (5, 6) mit zwei Auslassöffnungen (7, 8) oder eine Auslaßöffnung (7, 8) mit zwei Einlassöffnungen (5, 6) verbinden,
- wobei die Einlegeplatte (23) die Kanalabschnitte (26, 27) der einen Halbschale (21, 22) zur anderen Halbschale (21, 22) hin verschließt,
**dadurch gekennzeichnet,**
- **dass** das Mischglied (4) ein Kanalsystem (12) mit vier Kanälen (13 bis 16) enthält, die etwa gleich große Strömungsquerschnitte aufweisen, so dass die der jeweiligen Einlassöffnung (5, 6) zugeführte Abgasströmung (9, 10) jeweils über zwei separate Kanäle (13 bis 16) hälftig aufgeteilt den beiden Auslassöffnungen (7, 8) zugeführt wird, wobei die den Auslassöffnungen (7, 8) über jeweils zwei separate Kanäle (13 bis 16) zugeführten Teilströmungen (29 bis 32) an den Auslassöffnungen (7, 8) wieder zu gleich großen Abgasströmungen (9, 10) rekombiniert werden.

2. Mischglied nach Anspruch 1,
**dadurch gekennzeichnet,**
**dass** das Kanalsystem (12) enthält, das jede Einlassöffnung (5, 6) über zwei separate Kanäle (13 bis 16) mit den beiden Auslassöffnungen (7, 8) verbindet.

3. Mischglied nach Anspruch 1 oder 2,
**dadurch gekennzeichnet,**
**dass** das Kanalsystem (12) jede Auslassöffnung (7, 8) über zwei separate Kanäle (13 bis 16) mit den beiden Einlassöffnungen (5, 6) verbindet.

4. Mischglied nach einem der Ansprüche 1 bis 3,
**dadurch gekennzeichnet,**
**dass** das Mischglied (4) für jede Einlassöffnung (5, 6) einen Einlassraum (17, 18) enthält, von dem ein Kanal (13 bis 16) zu der einen Auslassöffnung (7, 8) und ein weiterer Kanal (13 bis 16) zur anderen Auslassöffnung (7, 8) abzweigen.

5. Mischglied nach einem der Ansprüche 1 bis 4,
**dadurch gekennzeichnet,**
**dass** das Mischglied (4) für jede Auslassöffnung (7, 8) einen Auslassraum (19, 20) enthält, in den ein von der einen Einlassöffnung (5, 6) kommender Kanal (13 bis 16) und ein von der anderen Einlassöffnung (5, 6) kommender Kanal (13 bis 16) einmünden.

6. Mischglied nach einem der Ansprüche 2 bis 5,
**dadurch gekennzeichnet,**
**dass** die beiden der jeweiligen Öffnung (5 bis 8) zugeordneten Kanäle (13 bis 16) Y-förmig angeordnet sind.

7. Mischglied nach einem der Ansprüche 2 bis 6,
**dadurch gekennzeichnet,**
**dass** zwei der vier Kanäle (13, 14) im wesentlichen parallel zueinander verlaufen, und zwar vorzugsweise so, dass sich Abgasströmungen durch diese beiden Kanäle (13, 14) im Mischglied (4) nicht mischen.

8. Mischglied nach einem der Ansprüche 2 bis 7,
**dadurch gekennzeichnet,**
**dass** zwei der vier Kanäle (15, 16) zueinander gekreuzt verlaufen, und zwar vorzugsweise so, dass sich Abgasströmungen durch diese beiden Kanäle (15, 16) im Mischglied (4) nicht mischen.

9. Mischglied nach einem der Ansprüche 1 bis 8,
**dadurch gekennzeichnet, .**
**dass** die Einlegeplatte (23) in den Einlassräumen (17, 18) jeweils die Abgasströmung (9, 10) in die beiden Kanäle (13 bis 16) aufteilt.

10. Mischglied nach einem der Ansprüche 1 bis 9,
**dadurch gekennzeichnet,**
**dass** die beiden Halbschalen (21, 22) Gleichteile sind.

11. Abgasanlage für eine Brennkraftmaschine, insbesondere eines Kraftfahrzeugs, mit zwei Abgassträngen (2,3), die über ein Mischglied (4) nach einem der Ansprüche 1 bis 10 miteinander verbunden sind.

12. Abgasanlage nach Anspruch 11,
**dadurch gekennzeichnet,**
**dass** stromab des Mischglieds (4) in wenigstens einem der Abgasstränge (2, 3) eine Sonde oder ein Sensor (11) angeordnet ist.

13. Abgasanlage nach Anspruch 12,
**dadurch gekennzeichnet,**
**dass** die Sonde oder der Sensor (11) zum Messen eines Harnstoffgehalts und/oder Ammoniakgehalts im Abgas ausgestaltet ist.

14. Abgasanlage nach einem der Ansprüche 11 bis 13,
**dadurch gekennzeichnet,**
**dass** jeder Abgasstrang (2, 3) stromauf des Mischglieds (4) eine Katalysatoranordnung enthält.

15. Abgasanlage nach Anspruch 14,
**dadurch gekennzeichnet,**
**dass** jede dieser Katalysatoranordnungen mit Harnstoff und/oder Ammoniak zur Reduzierung von Stickoxiden arbeitet.

## Claims

1. Mixing element for an exhaust system (1) of an internal combustion engine, in particular for a motor vehicle,
- comprising two inlet openings (5, 6) and two outlet openings (7, 8),
- each inlet opening (5, 9) being connected to both outlet openings (7, 8) such that they communicate,
- the mixing element (4) being assembled from two half shells (21, 22) and an insert plate (23) arranged therebetween,
- each half shell (21, 22) having two inlet opening portions (24), two outlet opening portions (25) and two channel portions (26, 27) which are open towards the other half shell (21, 22) and connect one inlet opening (5, 6) to two outlet openings (7, 8) or one outlet opening (7, 8) to two inlet openings (5, 6),
- the insert plate (23) closing off the channel portions (26, 27) of one of the half shells (21, 22) in the direction of the other half shell (21, 22),
**characterised in that**
- the mixing element (4) contains a channel system (12) having four channels (13 to 16) which have approximately the same size flow cross sections such that the exhaust gas flow (9, 10) supplied to the respective inlet opening (5, 6) is divided equally and supplied in each case to the two outlet openings (7, 8) by means of two separate channels (13 to 16), the partial flows (29 to 32) supplied to the outlet openings (7, 8) by means of two separate channels (13 to 16) in each case being recombined at the outlet openings (7, 8) to once again form exhaust gas flows (9, 10) having the same volume.

2. Mixing element according to claim 1, **characterised in that** the channel system (12) contains which connects each inlet opening (5, 6) to the two outlet openings (7, 8) by means of two separate channels (13 to 16).

3. Mixing element according to either claim 1 or claim 2, **characterised in that** the channel system (12) connects each outlet opening (7, 8) to the two inlet openings (5, 6) by means of two separate channels (13 to 16).

4. Mixing element according to any of claims 1 to 3, **characterised in that** the mixing element (4) contains an inlet chamber (17, 18) for each inlet opening (5, 6), from which chamber one channel (13 to 16) branches off to one of the outlet openings (7, 8) and an additional channel (13 to 16) branches off to the other outlet opening (7, 8).

5. Mixing element according to any of claims 1 to 4, **characterised in that** the mixing element (4) contains an outlet chamber (19, 20) for each outlet opening (7, 8), into which chamber one channel (13 to 16) coming from one of the inlet openings (5, 6) and one channel (13 to 16) coming from the other inlet opening (5, 6) open out.

6. Mixing element according to any of claims 2 to 5, **characterised in that** the two channels (13 to 16) assigned to the respective opening (5 to 8) are arranged in a Y-shape.

7. Mixing element according to any of claims 2 to 6, **characterised in that** two of the four channels (13, 14) extend substantially in parallel with one another, and preferably such that exhaust gas flows through these two channels (13, 14) do not mix in the mixing element (4).

8. Mixing element according to any of claims 2 to 7, **characterised in that** two of the four channels (15, 16) extend so as to cross over and preferably in such a way that exhaust gas flows through these two channels (15, 16) do not mix in the mixing element (4).

9. Mixing element according to any of claims 1 to 8, **characterised in that**, in each of the inlet chambers (17, 18), the insert plate (23) divides the exhaust gas flow (9, 10) between the two channels (13 to 16).

10. Mixing element according to any of claims 1 to 9, **characterised in that** the two half shells (21, 22) are identical parts.

11. Exhaust system for an internal combustion engine, in particular of a motor vehicle, comprising two exhaust gas lines (2, 3) which are interconnected by means of a mixing element (4) according to any of claims 1 to 10.

12. Exhaust gas system according to claim 11, **characterised in that** a probe or a sensor (11) is arranged downstream of the mixing element (4) in at least one of the exhaust gas lines (2, 3).

13. Exhaust gas system according to claim 12, **characterised in that** the probe or the sensor (11) is designed to measure a urea and/or ammonia content in the exhaust gas.

14. Exhaust gas system according to any of claims 11 to 13, **characterised in that** each exhaust gas line (2, 3) contains a catalytic converter arrangement upstream of the mixing element (4).

15. Exhaust gas system according to claim 14, **characterised in that** each of said catalytic converter arrangements works using urea and/or ammonia for reducing nitrogen oxides.

## Revendications

1. Elément mélangeur pour un système d'échappement (1) d'un moteur à combustion interne, en particulier d'un véhicule automobile,
- comportant deux ouvertures d'admission (5, 6) et deux ouvertures d'échappement (7, 8),
- dans lequel chaque ouverture d'admission (5, 9) est reliée de manière à communiquer avec les deux ouvertures d'échappement (7, 8),
- dans lequel l'élément mélangeur (4) est constitué de deux demi-coques (21, 22) et d'une plaque d'insertion (23) aménagée entre elles,
- dans lequel chaque demi-coque (21, 22) présente deux sections d'ouverture d'admission (24), deux sections d'ouverture d'échappement (25) et deux sections de canaux (26, 27) débouchant sur l'autre demi-coque (21, 22), lesquelles sections de canaux relient une ouverture d'admission (5, 6) à deux ouvertures d'échappement (7, 8) ou une ouverture d'échappement (7, 8) à deux ouvertures d'admission (5, 6),
- dans lequel la plaque d'insertion (23) ferme les sections de canaux (26, 27) de la première demi-coque (21, 22) à l'autre demi-coque (21, 22),
**caractérisé en ce que** :
- l'élément mélangeur (4) contient un système de canaux (12) avec quatre canaux (13 à 16), qui présentent à peu près les mêmes sections transversales d'écoulement de sorte que le courant de gaz brûlé (9, 10) acheminé à l'ouverture d'admission respective (5, 6) soit respectivement acheminé réparti de moitié via deux canaux séparés (13 à 16) aux deux ouvertures d'échappement (7, 8),
dans lequel les courants partiels (29 à 32) acheminés aux ouvertures d'échappement (7, 8) via respectivement deux canaux séparés (13 à 16) sont recombinés au niveau des ouvertures d'échappement (7, 8) en courants de gaz d'échappement (9, 10) de même grandeur.

2. Elément mélangeur selon la revendication 1,
**caractérisé en ce que** :
il contient le système de canaux (12) qui relie chaque ouverture d'admission (5, 6) aux deux ouvertures d'échappement (7, 8) via deux canaux séparés (13 à 16).

3. Elément mélangeur selon la revendication 1 ou la revendication 2,
**caractérisé en ce que** :
le système de canaux (12) relie chaque ouverture d'échappement (7, 8) aux deux ouvertures d'admission (5, 6) via deux canaux séparés (13 à 16).

4. Elément mélangeur selon l'une quelconque des revendications 1 à 3,
**caractérisé en ce que** :
l'élément mélangeur (4) contient pour chaque ouverture d'admission (5, 6) un espace d'admission (17, 18) par lequel un canal (13 à 16) se divise en une première ouverture d'admission (7, 8) et un autre canal (13 à 16) en l'autre ouverture d'admission (7, 8).

5. Elément mélangeur selon l'une quelconque des revendications 1 à 4,
**caractérisé en ce que** :
l'élément mélangeur (4) contient pour chaque ouverture d'échappement (7, 8) un espace d'échappement (19, 20), dans lequel un canal (13 à 16) venant de la première ouverture d'admission (5, 6) et un canal (13 à 16) venant de l'autre ouverture d'admission (5, 6) débouchent.

6. Elément mélangeur selon l'une quelconque des revendications 2 à 5,
**caractérisé en ce que** :
les deux canaux (13 à 16) affectés à l'ouverture respective (5 à 8) sont aménagés en forme de Y.

7. Elément mélangeur selon l'une quelconque des revendications 2 à 6,
**caractérisé en ce que** :
deux des quatre canaux (13, 14) s'étendent sensiblement parallèlement l'un à l'autre et ce, de préférence, de sorte que les courants de gaz brûlés passant par ces deux canaux (13, 14) ne se mélangent pas dans l'élément mélangeur (4).

8. Elément mélangeur selon l'une quelconque des revendications 2 à 7,
**caractérisé en ce que** :
deux des quatre canaux (15, 16) s'étendent de manière à se croiser l'un l'autre et ce, de préférence de sorte que les courants de gaz brûlés passant par ces deux canaux (15, 16) ne se mélangent pas dans l'élément mélangeur (4).

9. Elément mélangeur selon l'une quelconque des revendications 1 à 8,
**caractérisé en ce que** :
la plaque d'insertion (23) dans les espaces d'admission (17, 18) répartit respectivement l'écoulement de gaz brûlés (9, 10) dans les deux canaux (13 à 16).

10. Elément mélangeur selon l'une quelconque des revendications 1 à 9,
**caractérisé en ce que** :
les deux demi-coques (21, 22) sont des parties identiques.

11. Système d'échappement pour un moteur à combustion interne, en particulier d'un véhicule automobile, comprenant deux branches d'échappement (2, 3) qui sont reliées l'une à l'autre via un élément mélangeur (4) selon l'une quelconque des revendications 1 à 10.

12. Système d'échappement selon la revendication 11,
**caractérisé en ce que** :
en aval de l'élément mélangeur (4) dans au moins l'une des branches d'échappement (2, 3) est aménagé(e) une sonde ou un capteur (11).

13. Système d'échappement selon la revendication 12,
**caractérisé en ce que** :
la sonde ou le capteur (11) est installé(e) pour mesurer la teneur en urée et/ou la teneur en ammoniac dans les gaz brûlés.

14. Système d'échappement selon l'une quelconque des revendications 11 à 13,
**caractérisé en ce que** :
chaque branche d'échappement (2, 3) contient un aménagement catalytique en amont de l'élément mélangeur (4).

15. Système d'échappement selon la revendication 14,
**caractérisé en ce que** :
chacun de ces aménagements catalytiques travaille avec l'urée et/ou l'ammoniac pour réduire les oxydes d'azote.
